(19) Europäisches Patentamt
European Patent Office
Office européen des brevets

(11) **EP 1 789 889 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(21) Anmeldenummer: **05784779.0**

(22) Anmeldetag: **08.09.2005**

(51) Int Cl.:
*G06F 15/78* *(2006.01)*

(86) Internationale Anmeldenummer:
**PCT/EP2005/054452**

(87) Internationale Veröffentlichungsnummer:
**WO 2006/029986 (23.03.2006 Gazette 2006/12)**

(54) **RECHNEREINRICHTUNG MIT REKONFIGURIERBARER ARCHITEKTUR ZUR AUFNAHME EINES GLOBALEN ZELLULAREN AUTOMATEN**

COMPUTER WITH A RECONFIGURABLE ARCHITECTURE FOR INTEGRATING A GLOBAL CELLULAR AUTOMATON

DISPOSITIF INFORMATIQUE A ARCHITECTURE RECONFIGURABLE POUR LA RECEPTION D'UN AUTOMATE CELLULAIRE GLOBAL

(84) Benannte Vertragsstaaten:
**DE FR GB IT**

(30) Priorität: **16.09.2004 DE 102004044976**

(43) Veröffentlichungstag der Anmeldung:
**30.05.2007 Patentblatt 2007/22**

(73) Patentinhaber: **SIEMENS AKTIENGESELLSCHAFT 80333 München (DE)**

(72) Erfinder: **SIEMERS, Christian 38446 Wolfsburg (DE)**

(56) Entgegenhaltungen:
• **WIEGAND C ET AL: "Definition of a Configurable Architecture for Implementation of Global Cellular Automaton" LECTURE NOTES IN COMPUTER SCIENCE, SPRINGER VERLAG, NEW YORK, NY, US, Bd. 2981, Februar 2004 (2004-02), Seiten 140-155, XP002326434 ISSN: 0302-9743**

**Beschreibung**

Die vorliegende Erfindung bezieht sich auf eine Rechnereinrichtung mit rekonfigurierbarer Architektur zur Aufnahme eines globalen zellularen Automaten gemäß dem Oberbegriff des Patentanspruches 1. Eine solche Rechnereinrichtung ist aus der Veröffentlichung von C. Wiegand et al. in "Lecture Notes in Computer Science, Springer Verlag, New York (US), Bd. 2981, Februar 2004, Seiten 140 bis 155 bekannt.

Die bekannte Rechnereinrichtung ist in der Lage, einen globalen zellularen Automaten aufzunehmen, der in Form einer einzigen so genannten "Look-Up-Table" (LUT) beschreibbar ist. Eine sehr große LUT zeigt aber das Problem, dass der Flächenbedarf der Rechnereinrichtung exponentiell mit den Eingängen in Form von Adressleitungen wächst.

Aufgabe der Erfindung ist es daher, eine Rechnereinrichtung mit rekonfigurierbarer Architektur zur Aufnahme eines globalen zellularen Automaten dahingehend auszugestalten, dass eine schnelle Berechnung bei einer größeren Anpassung an die Erfordernisse der jeweiligen Applikation unter Einbeziehung der Speicherbereiche ermöglicht wird und insbesondere der Flächenbedarf reduziert wird.

Die Aufgabe ist erfindungsgemäß durch die Gesamtheit der Merkmale des Patentanspruches 1 gelöst. Erfinderische Weiterbildungen sind in den abhängigen Ansprüchen angegeben.

Gegenstand der Erfindung ist eine Rechnereinrichtung mit rekonfigurierbarer Architektur zur Aufnahme eines globalen zellularen Automaten, der folgende Elemente enthält:

- einen RAM-basierten Hauptteil mit

    - einer mehrere RAM-Zellen aufweisenden, strukturierbaren RAM-Einheit,
    - einer ersten Kreuzschienenschalteinheit, auf deren Eingang Eingangsdaten der Architektur von außen zugebbar sind und deren Ausgang mit dem Eingang der RAM-Einheit über ein erstes Busleitungssystem verknüpft ist, und
    - einer zweiten Kreuzschienenschalteinheit, deren Eingang mit dem Ausgang der RAM-Einheit über ein zweites Busleitungssystem verknüpft ist und deren Ausgang mit dem Eingang der ersten Kreuzschienenschalteinheit über ein drittes Busleitungssystem zu einer Rückkopplung von ausgangsseitigen Daten der zweiten Kreuzschienenschalteinheit in den Eingang der ersten Kreuzschienenschalteinheit verknüpft ist,

wobei zur Adressierung der RAM-Einheit und der zweiten Kreuzschienenschalteinheit von der ersten Kreuzschienenschalteinheit erzeugte Adresssignale bzw. zuführbar sind und wobei die ausgangsseitigen Daten der zweiten Kreuzschienenschalteinheit, gegebenenfalls nach weiterer Bearbeitung, auch einem Ausgangsnetzwerk zur Abgabe von Ausgangsdaten der Architektur zuführbar sind, bei der erfindungsgemäß Mittel eines zusätzlichen Steuerteils zu einer Ablaufsteuerung des Hauptteils mit einer Zählereinheit vorhanden sind, wobei der Zählereinheit und der ersten Kreuzschienenschalteinheit ein gemeinsames Taktsignal zuzuführbar ist und wobei der ersten und zweiten Kreuzschienenschalteinheit bzw. von der Zählereinheit erzeugte Zählerstandssignale zuführbar sind.

Bei der Erfindung wird der Begriff "konfigurierbar" im Sinne von "Angabe und/oder Einstellbarkeit charakteristischer Größen, insbesondere der für den Betrieb genutzten Struktur, die das weitere Verhalten des betreffenden Rechnerteils beeinflussen," verstanden. Unter "programmierbar" wird "die Möglichkeit zur Änderung eines aktuellen Programmzustandes oder Programmablaufs, nach dem der betreffenden Rechnerteil arbeitet", verstanden.

Die mit der erfindungsgemäßen Ausbildung der Recheneinrichtung verbundenen Vorteile sind insbesondere darin zu sehen, dass eine im Vergleich zu der vorgeschlagenen Einrichtung erhöhte Flexibilität bezüglich einer Anpassung an mögliche Applikationen zu erreichen ist, wobei man von einer festen Partitionierung der Speicherbereiche a priori absieht. Die erfindungsgemäße Architektur ist zur Aufnahme von globalen zellularen Automaten und ähnlichen Rechnerarchitekturen geeignet. Die Berechnung eines neuen Zustandes erfordert in diesen Architekturen vergleichsweise wenig Zeit; nur die Anzahl der Durchläufe muss dafür berechnet werden. Dabei ist die Architektur in der Aufteilung des Speichers auf die einzelnen Rechenschritte flexibel und lässt zugleich eine Variierbarkeit der Anzahl der Durchläufe zu. Diese Form der Rechnerarchitektur ist besonders für sehr zeitkritische Berechnungen in eingebetteten Applikationen wie z. B. im Automobilbereich, für die Kommunikationstechnik und für die Automatisierungstechnik, insbesondere bei einem zyklischen Verhalten von Steuerungen, geeignet.

Bei dieser Grundstruktur der neuen Rechnereinrichtung erscheint also das Ausgangssignal direkt als Teil der von der zweiten Kreuzschienenschalteinheit ausgehenden, über das dritte Busleitungssystem geführten ausgangsseitigen Daten. Dies bedeutet, dass nicht unbedingt eine Speicherung der ausgangsseitigen Daten und deren weitere Bearbeitung erforderlich sind. Hierbei ist aber die Anzahl der Durchläufe von vornherein festgelegt.

Bei der erfindungsgemäßen Rechnereinrichtung wird die RAM-Einheit so benutzt, dass eine rekonfigurierbare boolsche Funktion der Eingangsdaten am Ausgang realisiert wird. Dies bedeutet, dass die Eingänge den Adressbus der RAM-Einheit und die Ausgänge den Datenbus der RAM-Einheit darstellen. Damit wird die RAM-Einheit im Betrieb als ROM (Read-Only Memory) betrieben; nur während einer (Re)Konfiguration wird in die RAMs geschrieben.

Aus dieser Sicht heraus wird die RAM-Einheit als eine Sequenz von kleinen LUT (Look-Up-Table)-Strukturen betrieben, wobei Größe und Anzahl der LUT einstellbar sind.

Bei der Erfindung zeigen die der ersten und zweiten Kreuzschienenschalteinheit zuzuführenden Zählerzustandssignale an, an welchem Punkt der vorerwähnten Sequenz die Berechnung angetroffen wird. Die Art der Berechnung ist dabei so ausgestaltet, dass bei jedem Zyklus ein Teil der RAM-Einheit genutzt wird und dass eine komplette Berechnung mehrere solcher Zyklen benötigt. Jeder Zyklus wird von der Zählereinheit gekennzeichnet, und die Kreuzschienenschalteinheiten werden in jedem Zyklus auf den spezifischen Wert rekonfiguriert, um die Sequenz zu ermöglichen. Zugleich bestimmt die Zählereinheit zusammen mit der Vergleichseinheit, wann die Sequenz beendet ist.

Auf diese Weise wird mit den erfindungsgemäßen Maßnahmen vorteilhaft eine universelle Rechenmaschine ermöglicht, die eine sehr schnelle Berechnung mit einer möglichst guten Flächenausnutzung kombiniert. Als Grundlage für diese Maßnahmen dient das GCA(Global-Cellur-Automaton)-Modell, das bekanntlich universell ist. Dieses Modell lässt sich verhältnismäßig einfach in eine einzige LUT umsetzen. Es ist deshalb so vorteilhaft, weil im GCA die Kommunikation global ist bzw. sein kann. Gerade diese Kommunikation macht beim Stand der Technik große Probleme, einen GCA in einen bekannten PLD umzusetzen.

Beim Stand der Technik ergibt sich durch die sehr große LUT zeigt aber das Problem, dass der Flächenbedarf exponentiell mit den Eingängen in Form von Adressleitungen wächst. Daher werden bisher üblicherweise die LTU-Größen auf maximal fünf Eingänge begrenzt. Die Erfindung ermöglicht es demgegenüber, einen GCA und damit eine universelle Rechnereinrichtung auf eine Sequenz von LUT's abzubilden. Die Sequenz ist durch den Zähler konfigurierbar (mit 1 ... X-1 Zyklen), die RAM-Einheit wird sehr gut ausgenutzt bzw. kann bei gleicher Größe wesentlich komplexere Algorithmen aufnehmen. Dieser Baustein kann somit auf Kosten der Rechenzeit (= Anzahl der Sequenzen Zykluszeit) den Flächenbedarf so anpassen, dass das Problem komplett behandelt werden kann. Die Flächenausnutzung ist dementsprechend günstig.

Wie bereits erwähnt gehen vorteilhafte Ausgestaltungen der erfindungsgemäßen Rechnereinrichtung aus den von Anspruch 1 abhängigen Ansprüchen hervor. Dabei kann die Ausführungsform nach Anspruch 1 mit den Merkmalen eines der Unteransprüche oder vorzugsweise auch denen aus mehreren Unteransprüchen kombiniert werden. Demgemäß kann die erfindungsgemäße Rechnereinrichtung noch folgendermaßen ausgebildet sein:

- Für eine Speicherung und Bearbeitung der ausgangsseitigen Daten/Signale der zweiten Kreuzschienenschalteinheit ist es von Vorteil, wenn die ausgangsseitigen Daten zunächst einer programmierbaren antivalenten Verknüpfungseinheit zuzuführen sind. Mittels einer derartigen Antivalenzeinheit ist der Designraum zu vergrößern.
- Unabhängig davon oder vorzugsweise zusätzlich können die ausgangsseitigen Daten/Signale der zweiten Kreuzschienenschalteinheit einer nachgeordneten Registereinheit zuzuführen sein, deren Ausgang mit dem Ausgangsnetzwerk zur Abgabe von Ausgangsdaten der Architektur verknüpft ist. Solche Registereinheiten machen die Ausgänge stabiler.
- Dabei kann zweckmäßig der Zählereinheit eine konfigurierbare Vergleichseinheit zugeordnet sein, der das gemeinsame Taktsignal zuzuführen ist, wobei der Registereinheit ein die Datenübernahme aus der antivalenten Verknüpfungseinheit steuerndes Taktsignal der Vergleichseinheit und der Zählereinheit ein Rücksetzsignal der vergleichseinheit zuzuführen sind.
- Ferner ist es vorteilhaft, wenn die RAM-Einheit RAM-Basisbereiche enthält, die die mit einer OR/MUX-Schalteinheit verknüpften RAM-Zellen aufweist.
- Dabei können der OR/MUX-Schalteinheit Adresssignale von der ersten Kreuzschienenschalteinrichtung zuzuführen sein.
- Als Speicherbausteine können vorteilhaft zusätzlich CAMs vorgesehen sein. Dabei ist zu bedenken, dass die Beschaltung von RAMs und deren Verwendung teilweise denen eines CAMs entspricht: Gesucht wird nämlich nicht der Inhalt, sondern die Stelle, wo sich ein bestimmter Inhalt findet. Das bedeutet, dass man einen Teil eines RAMs durch ein CAM ersetzen oder vergrößern kann. In diesem Umfang sind für den RAM-basierten Hautteil auch CAMs verwendbar.
- Besonders vorteilhaft ist wenigstens ein GCA zu integrieren bzw. zu implementieren. Ein GCA besteht aus einer Kopplung mehrerer einfacher Zustandsautomaten. Ein Zustandsautomat berechnet in einem Takt, insbesondere des Taktsignals der Vergleichseinheit, aus dem bisherigen Ergebnis (Zustand) und den Eingangswerten den neuen Zustand. In einem GCA sind nun mehrerer solcher Zustandsautomaten integriert, wobei einige Ausgänge der einzelnen Automaten mit Eingängen anderer Automaten verbunden sind. Dies stellt die Kopplung dar. Die Implementierung sieht nun so aus, dass die einzelnen Automaten "nebeneinander" in Hardware realisiert sind. Dies bedeutet, dass, falls eine Registereinheit vorhanden ist, jeweils pro Zustandsautomat eine Anzahl von Registern den Zustand in binärcodierter Form darstellen. Falls keine Register vorhanden sind, ist dies ein so genannter "asynchroner" Automat; in diesem Fall wird ein Teil der Leitungen des dritten Busleitungssystems als Zustandscodierung genommen. Die Automaten werden dann in an sich bekannter Weise "einzeln" implementiert. Die Kopplung ist mit Hilfe des ersten und zweiten Busleitungssystems vorzunehmen. Die Mehrteilung der RAMs kann dabei der Erweiterung der Möglichkeit einer Implementierung dienen.

- Als Speicherelemente können bevorzugt magnetoresistive Bauelemente, insbesondere vom TMR-Typ, vorgesehen sein. Entsprechende tunnel-magnetoresistive Elemente sind hinlänglich bekannt.

Die Ausgestaltung und Funktionsweise der erfindungsgemäßen Rechnereinheit werden nachfolgend unter Bezugnahme auf die Zeichnung noch weiter erläutert.

Es zeigen die

Figuren 1 bis 4     Darstellungen zum Stand der Technik,
Figur 5             den gesamten Aufbau einer strukturierbaren, rekonfigurierbaren RAM-Architektur einer Einrichtung nach der Erfindung,
Figur 6             den Aufbau eines RAM-Bereichs bzw. einer RAM-Einheit mit dazugehörigen rekonfigurierbaren Kreuzschienenschalteinheiten,
Figur 7             den Aufbau eines RAM-Basisbereichs,
Figur 8             den Aufbau einer OR/MUX-Schalteinheit und
Figur 9             die innere Struktur dieser speziellen Schalteinheit.

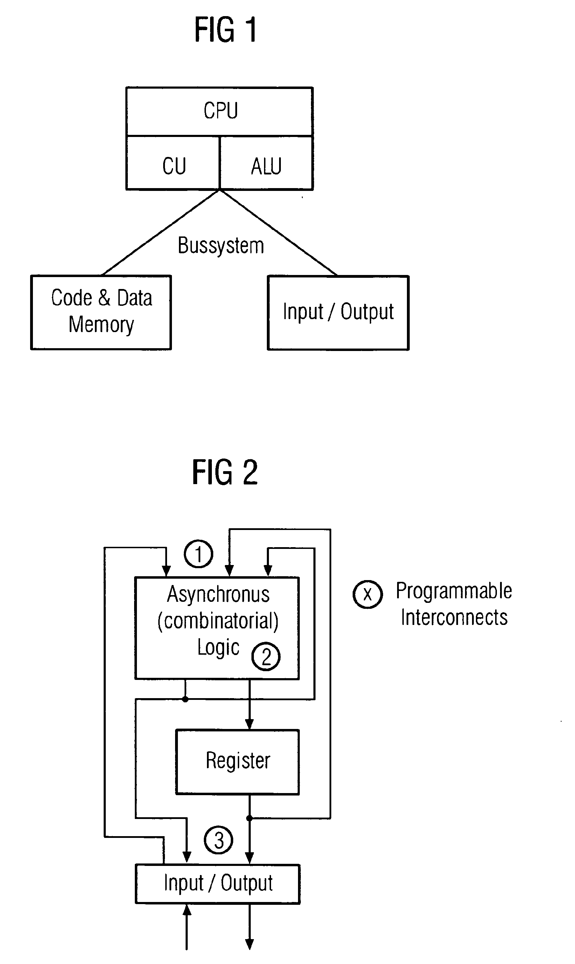

Anhand der Figuren 1 bis 4 werden die Grundlagen der Rechnermodelle erläutert und der relevante Stand der Technik dargestellt

Bekannte Rechnermodelle: Der Aufbau und Strukturen/Architekturen von Rechnern sind beispielsweise in Literaturstelle [7] beschrieben (vgl. dort insbesondere Seiten 174 bis 181, 229 bis 248, 376 bis 384, 400 und 401).

Allgemein wird die so genannte ‚Von-Neumann-Architektur', wie sie aus der prinzipiellen Darstellung der Figur 1 hervorgeht, als Universalrechnereinrichtung angesehen. Darunter ist zu verstehen, dass mithilfe eines Rechners, auf dieser Architektur mit den Komponenten Central Processing Unit [CPU, darin enthalten Control Unit (CU) und Arithmetical-Logical Unit (ALU)], Memory (Speicher), Input/Output (Ein-/Ausgabe) und Bussystem basierend, alle algorithmierbaren Probleme prinzipiell berechnet werden können. Die Einstellung eines solchen Rechners auf das jeweilige Problem erfolgt durch ein Programm, d.h., eine textuelle Beschreibung des Algorithmus z. B. in den Programmiersprachen C, C++ oder Java. Dieses Programm wird durch einen Übersetzer (Compiler), selbst ein Programm darstellend, in ein Maschinen-lesbares Programm übersetzt.

Die Programmbearbeitung erfolgt in den Rechner, die auf der Von-Neumann-Architektur nach Figur 1 und ähnlichen Architekturen (z. B. einer Harvard- oder modifizierten Harvard-Architektur) basieren, prinzipiell auf sequenzielle Weise. Dies ist so zu verstehen, dass der Algorithmus, bestehend aus einer Menge von Maschinen-Instruktionen, dadurch bearbeitet wird, dass die erste Instruktion bekannt ist. Die einem Befehl nachfolgende Instruktion ist entweder die im Speicher an der nächsten Adresse stehende Instruktion (normaler Programmfluss), oder die letzte ausgeführte Instruktion war ein Sprungbefehl, der den aktuellen Programmstand an eine andere Stelle versetzt. Das interne Register, das den aktuellen Programmstand speichert, wird mit ‚Program Counter' (PC) bezeichnet.

Dieses Prinzip der sequenziellen Bearbeitung bedeutet, dass sich zu einem Zeitpunkt genau eine Instruktion in der Bearbeitung befindet. Es wird als ‚Von-Neumann-Prinzip' bezeichnet. Moderne Architekturen, die als RISC (Reduced Instruction-Set Computing), superskalar oder VLIW (Very Long Instruction Word) bezeichnet werden, führen zwar zu einem Zeitpunkt mehr als eine Instruktion aus; das Prinzip der Sequenzialität bleibt jedoch erhalten. Insgesamt wird dieses Ausführungsprinzip als 'zeit-sequenziell' (Computing in Time) bezeichnet, was andeutet, dass der Algorithmus Zeit benötigt.

Ein gänzlich anderes Prinzip der Programmbearbeitung ist in programmierbaren Logikbausteinen [PLDs (Programmable Logic Devices), entsprechend Figur 2] bzw. deren bekanntester Implementierung, den FPGAs (Field-Programmable Gate Arrays), vorgesehen. Auch diese Architektur ist universell, d.h. für jedes algorithmierbare Problem einsetzbar. Die Programmierung erfolgt hierbei so, dass elementare Recheneinheiten, meist auf Bit-Ebene definiert und daher als Logikelemente bezeichnet, in einem Netzwerk verschaltet werden. Diese Form der Programmierung wird meist als ‚Konfiguration' bezeichnet.

Die Programmbearbeitung in einem PLD erfolgt im Unterschied zum Von-Neumann-Prinzip mit maximaler Parallelität. Die gesamte Konfiguration eines Bausteins kann als eine einzige Instruktion - im Gegensatz zum Von-Neumann-Prinzip allerdings nicht fest definiert, sondern zusammengesetzt - aufgefasst werden, die in einem Zyklus komplett bearbeitet wird. Die Zykluszeit, häufig mit einem externen Takt in Verbindung gebracht, ist dann von der Komplexität der Zusammensetzung abhängig. Hierdurch kommt ein im Vergleich zu Prozessoren niedrigerer Takt zum Einsatz, der aber durch die Parallelität der Ausführung mehr als ausgeglichen wird. Dieses Prinzip der Ausführung wird als 'Computing in Space' bezeichnet.

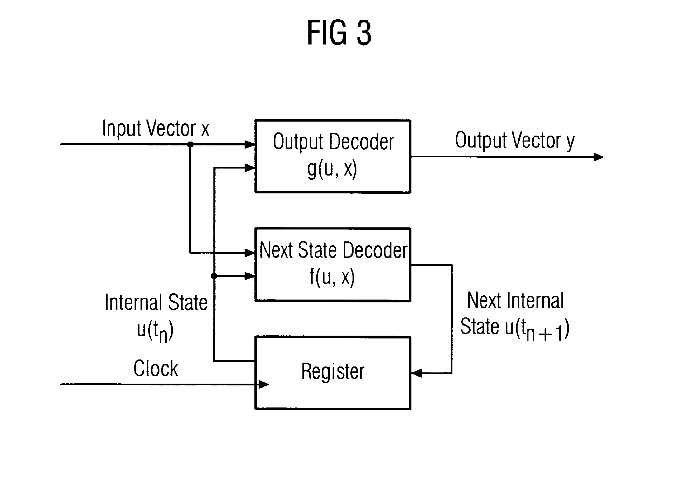

Deterministische endliche Automaten: Eines der wesentlichen Modelle zur Algorithmierung von Problemen sind deterministische endliche Automaten [DEAs, auch DFAs (deterministic finite automata)]. Diese werden in der Technik auch als ‚Finite State Machines' (FSMs gemäß der prinzipiellen Darstellung nach Figur 3) bezeichnet. Dieses Modell betrachtet das Problem als eine Folge von Zuständen mit definierten Übergangsfunktionen (Next State Decoder) zwischen diesen, abhängig von den Eingangswerten. Obwohl das Modell des DEA theoretisch nicht so mächtig ist wie das des Von-Neumann-Modells, können in der Praxis beliebige Probleme, gegebenenfalls mit Zusatz im Modell, gelöst werden.

Das größte Problem dieser DEAs besteht darin, dass ihre Funktionen mit der Anzahl der Zustände in exponentieller Weise anwachsen, den Flächenbedarf an Halbleitermaterial (insbesondere Silizium) betreffend. Aus diesem Grund wählt man bevorzugt Modelle, die aus vielen, miteinander kommunizierenden Automaten bestehen. Ein derartiges Rechnermodell wird als ‚komplexer, kooperierender Automat' bezeichnet.

Darstellung Boolescher Funktionen: Eine *Boolesche Funktion* oder *Schaltfunktion* ist eine Abbildung f: $B^m \rightarrow B^n$, mit B={0,1}, die in der Form f = ($f_1$, $f_2$, ...$f_n$), also als Vektor von Funktionen $f_k$: $B^m \rightarrow B$ dargestellt werden kann. Im Folgenden wird daher nur von Funktionen $f_k$ mit einem Ausgangswert ausgegangen; diese werden allgemein als f bezeichnet.

Es ist weiterhin bekannt, dass f in Form einer disjunktiven oder konjunktiven Normalform darstellbar ist. Für die disjunktive Normalform bedeutet dies, dass

$$\texttt{f = z1 + z2 ... + zk, mit k = 1, 2, ..., 2m und '+' als OR-Operator (logisches ODER)} \qquad (1)$$

und

$$\texttt{zi = y1 * y2 * ... yn mit i = 1, 2, ..., k mit '*' als AND-Operator (logisches UND)} \qquad (2)$$

gilt. Es werden natürlich nur solche zi verwendet, für die die zu beschreibende Funktion den Wert TRUE oder '1' erhält. Die Bezeichnung yj bestimmt dabei, wie ein Inputbit $i_k$ aus dem Inputvektor x = ($i_1$, $i_2$, ...$i_k$) werden soll. Während für die Inputbits nur Werte aus der Menge {0, 1} zugelassen sind, muss dies für yj geändert werden: Diesen Werten wird eines aus den drei Attributen {0, 1, -} zugewiesen: Das Attribut '1' für yj bedeutet dabei, dass $i_k$ unverändert genommen wird, '0' bedeutet, dass $i_k$ invertiert gewählt werden muss (notiert als /$i_k$), und '-' steht für don't care; d.h., $i_k$ wird nicht verwendet. Werden für yj nur die Werte {0, 1} als Attribute verwendet, spricht man von der ‚kanonisch disjunktiven Normalform'.

Diese Darstellung ist deswegen bedeutend, weil dadurch bei bekannter Reihenfolge der Inputbits die Teilausdrücke zi gemäß vorstehender Gleichung (2), auch als ‚*Terme*' bezeichnet, als so genannte ‚*Stringterme*' darstellbar sind: Bei einer Reihenfolge i1, i2, i3 bedeutet "111", dass z1 = i1 * i2 * i3 ist, "0-1" steht für z2 = /i1 * i3 usw.

Bei drei Inputbits ist die Menge aller möglichen Inputvektoren v = {000,001,010,011,100,101,110,111}. Falls beispielhaft die Funktion f nur an den Eingangsvektor {001,011,111} den Wert TRUE erhält, brauchen oder dürfen auch nur diese angegeben werden; in Form von Stringterms kann dies durch 111 und 0-1 erfolgen, dies charakterisiert vollständig die gegebene Funktion und ist isomorph zur disjunktiven Normalform f = /i1 * i3 + i1 * i2 * i3

Content-Addressable Memory (CAM): Lese-/Schreib-Speicherbausteine [RAM(Random Addressable Read/Write Memory)] werden üblicherweise zur Speicherung von Daten und Programmen genutzt. In diesem Fall liegt eine Adresse an dem Adressbus an, und nach Ablauf einer Baustein-spezifischen Wartezeit ist beim Lesevorgang das gespeicherte Datum am Datenbus anliegend und kann weiter verwendet werden. Der Schreibvorgang ist in entsprechender Weise arbeitend.

Aus Sicht der Instanz, die die Daten erhalten möchte (z. B. ein Prozessor), ist die Adresse bekannt, und der gespeicherte Inhalt ist vorher unbekannt. Es existieren jedoch Anwendungen, bei der das Verhältnis genau umgekehrt ist: Der gespeicherte Inhalt ist bekannt, und das Interesse ist, an welcher Adresse dieser Inhalt gespeichert ist, wobei die Antwort auch 'nicht vorhanden' sein kann. Speicherbausteine, die diese Art der Abfrage unterstützen, werden als ‚Content-Addressable Memories' [CAMs (Inhalts-adressierbare Speicherbausteine)] bezeichnet.

Speicherbausteine, die als CAM bezeichnet werden und dieses Verhalten direkt unterstützen, gelten als spezielle Bausteine und sind keineswegs häufig anzufinden. Für praktische Anwendungen kann man jedoch die Funktionalität des CAM durch übliche RAM-Bausteine emulieren. Hierzu müssen für alle Daten, die im CAM direkt gespeichert werden würden, bei einer Abfrage jedoch nicht der Wert, sondern die Speicheradresse ergeben, die korrespondierenden Adressen vorher berechnet werden und an der RAM-Adresse, die dem Datum entspricht, gespeichert werden.

Zellulare Automaten: Zellulare Automaten [CAs (Cellular Automata)] sind eine Menge von endlichen Automaten, die in einem Feld mit feststehender Topologie angeordnet sind und weitere Eigenschaften besitzen (vgl. Literaturzitate [1] und [4]).

Diese Menge von FSMs ist als *n*-dimensionales Array (meist gilt $n = 2$) angeordnet, wobei jedem Platz feste Koordinaten gegeben sind. Jede FSM besitzt eindeutig Nachbarn, mit denen kommuniziert werden kann. Im Fall $n = 2$ werden meist die 4 umliegenden FSMs (in den 'Himmelsrichtungen' N, E, W, S, daher auch als ,NEWS-Nachbarschaft' bezeichnet) als Nachbarn angesehen.

Die Kommunikation mit den Nachbarn erfolgt so, dass die Zustände der direkten Nachbarn lesbar und damit auswertbar sind. Mit jedem Zeitschritt wird der Zustand aller Zellen parallel berechnet. Sollen Daten aus weiter entfernten Zellen für die Berechnung eines neuen Zustandes genutzt werden, so müssen diese Daten schrittweise von Zelle zu Zelle transportiert werden. Damit sind klassische zellulare Automaten gut zur Berechnung von Problemstellungen mit hoher Lokalität der Daten geeignet.

CAs gelten als universelle Rechner wie die vorher diskutierten Architekturen; sie arbeiten zudem vollkommen parallel. Soll ein Netz von CAs in eine Hardwareschaltung, z. B. einen ASIC oder auch PLD, abgebildet werden, so steigt die Anzahl der Verbindungen linear mit der Zahl der Automaten an. Die Verbindungen selbst sind je nach gewählter Topologie nur relativ kurz und fest verlegt. Der Aufwand zur Kommunikation der CAs untereinander ist also relativ gering. Wird als Komplexität einer Schaltfunktion der Speicherbedarf angesehen, der nötig ist, diese Schaltfunktion in ein RAM abzubilden, so steigt die maximale Komplexität der dem Verhalten einer Zelle entsprechenden Schaltfunktion exponentiell mit der Anzahl der Eingangsvariablen und linear mit der Anzahl der Ausgangsvariablen der Funktion an. Die Zahl der Eingangsvariablen ist hier die Summe aller Bits, die nötig sind, die Zustände aller mit der Zelle verbundenen CAs einschließlich des Zustandes der Zelle selbst zu codieren. Damit ist die maximale Komplexität der Zelle im Wesentlichen durch die Anzahl der Verbindungen eines jeden Automaten beschränkt.

Das Konzept der globalen zellularen Automaten [GCAs (Global Cellular Automata)] überwindet die Einschränkungen der CAs, indem Verbindungen einer Zelle nicht nur zu ihren nächsten Nachbarn, sondern zu beliebigen Zellen im gesamten Feld erlaubt werden. Damit besitzt ein GCA keine feststehende Topologie mehr sondern ermöglicht, eine an die Problemstellung angepasste und gegebenenfalls zur Laufzeit der Berechnung sogar wechselnde Topologie zu verwenden. Dies kann zu einer erheblichen Beschleunigung in der Programmbearbeitung führen. Die Anzahl der Verbindungen eines einzelnen Automaten ist gegebenenfalls durch eine obere Grenze festgelegt. Ist nur eine einzelne Verbindung erlaubt, so spricht man von einarmigen-, im allgemeinen Fall von *k*-armigen GCAs.

Als Konsequenz steigt bei der Realisierung eines Feldes von GCAs der erforderliche Aufwand für die Kommunikation der Zellen untereinander mit der Zahl der Zellen stark an. Die Anzahl der möglichen Verbindungen zwischen den einzelnen Automaten steigt quadratisch mit deren Anzahl.

Die Komplexität der einzelnen Automaten selbst bzw. der zugrunde liegenden Schaltfunktion hängt wie bei den konventionellen CAs im Wesentlichen von der Anzahl der Verbindungen einer jeden Zelle ab. Soll ein GCA in eine rekonfigurierbare Schaltung (PLD) abgebildet werden, so muss jede einzelne Zelle, die ja beliebige Schaltfunktionen realisieren kann, die maximal mögliche Komplexität ermöglichen.

Werden die einzelnen Automaten auf jeweils ein Rechenwerk mit lokalem Speicher abgebildet, so kann jede Zelle auch komplexe Schaltfunktionen realisieren. Der Aufwand für eine beliebige Kommunikation alle Zellen steigt quadratisch mit der Anzahl der Zellen. Die Granularität der Schaltung wird dann bestimmt durch die Anzahl der Zellen bzw. die Bitbreite der Verbindungen zwischen den Zellen. Eine solche Schaltung kann sehr gut GCAs realisieren, die in Anzahl der FSMs und Bitbreite den Vorgaben der Schaltung entsprechen. Es können auch komplexe Schaltfunktionen in jeder einzelnen Zelle realisiert werden.

Nachteilig wirkt sich jedoch aus, dass GCAs, die in Anzahl und benötigter Bitbreite der Verbindungen nicht mit der vorgegebenen Körnigkeit übereinstimmen, nur schwierig auf die Schaltung abgebildet werden können.

Werden die einzelnen Zellen als Schaltnetz ausgeführt, so muss jede Zelle in der Lage sein, Daten von allen anderen Zellen einschließlich des eigenen Zustands zu verarbeiten. Aus diesem Grund muss jedes Schaltnetz Schaltfunktionen realisieren können, die alle binärcodierten Zustände aller Zellen als Eingabevariablen enthalten können. Die Anzahl der Ausgabevariablen der Schaltfunktion muss es lediglich ermöglichen, alle Zustände einer einzelnen Zelle binär zu codieren. Nachteilig ist hier, dass die Komplexität der Schaltfunktion exponentiell mit der Anzahl der Eingabevariablen ansteigt. Ebenfalls nachteilig ist der polynomial ansteigende Aufwand für die Kommunikation der Zellen untereinander.

Eine (re-)konfigurierbare Architektur (PLD), die zur Aufnahme eines GCA geeignet ist, muss also pro FSM eine beliebige Komplexität aufnehmen können. Dies bedeutet, dass - falls die FSMs direkt in eine Zelle des PLDs abgebildet werden sollen - die Zellen jede beliebige Funktion aufnehmen müssen. Es ist bekannt, dass sich hieraus ein exponentielles Wachstum der Zellengröße ergibt. Das konfigurierbare Netzwerk in dem PLD muss zudem vollständig ausgeführt sein, d.h., jeder Zellenausgang muss mit jeder anderen Zelle verbindbar sein. Das Netzwerk wächst damit quadratisch an, die Konfiguration des Netzwerks ebenfalls.

Derzeit sind keine PLD-Architekturen bekannt, die beide Forderungen erfüllen: Große Zellen mit einem vollständigen Designraum existieren nicht, es gibt nur kleine Zellen mit vollständigem Designraum [so genannte ,Look-Up-Table-Struktur' (LUT)] oder große Zellen mit unvollständigen Möglichkeiten zur Abbildung beliebiger Funktionen. Eine vollständige Verbindbarkeit aller Zellen ist nur bei großen Zellen möglich. Die Abbildung von GCAs auf existierende PLDs ist damit schwierig, vielfach sogar unmöglich.

Zur Vermeidung der vorgenannten Probleme wurde mit der nichtvorveröffentlichten DE-Patentanmeldung 10 2004 007 232.9 vom 13.02.2004 mit dem Titel "Rekonfigurierbare Architektur zur parallelen Berechnung beliebiger Algorithmen" eine Architektur einer Rechnereinrichtung vorgeschlagen, die wenigstens ein einzeln konfigurierbares und/ oder rekonfigurierbares Schaltnetz aufweist, dessen Ausgangsvariablen zu einem Zeitpunkt $t_{n-1}$ die Eingangsvariablen des Schaltnetzes zum Zeitpunkt $t_n$ bilden, und die mit Mitteln zum Speichern der Ausgangsvariablen des Schaltnetzwerks zwischen den Zeitpunkten $t_{n-1}$ und $t_n$ versehen ist.

Dabei sind mit den Zeitpunkten $t_{n-1}$ und $t_n$ direkt aufeinander folgende Auswertungen der Schaltfunktion bezeichnet. In einer technisch günstigen Realisierung können diese Zeitpunkte von einem eingeprägten Takt mit einer Taktdauer T abgeleitet werden, so dass $t_n - t_{n-1} = k \cdot T$ mit $k=1,2,3,...$ gilt. Für eine gegebene Anwendung ist hierbei k konstant, für verschiedene Anwendungen kann es unterschiedlich gewählt werden.

Nachdem feststeht, dass die Komplexität der Schaltfunktion exponentiell mit der Anzahl der Eingabevariablen und linear mit der Anzahl der Ausgabevariablen bzw. der Anzahl der Zellen im Feld der abzubildenden GCAs steigt und der Aufwand für die Kommunikation der GCAs untereinander zumindest quadratisch mit der Anzahl der Zellen ansteigt, ist die vorgeschlagene (re-)konfigurierbare Architektur zur Aufnahme von GCAs geeignet. Hierzu besteht sie aus wenigstens einem einzelnen konfigurierbaren Schaltnetz, dessen Ausgangsvariablen zum Zeitpunkt $t_{n-1}$ die Eingangsvariablen des Schaltnetzes zum Zeitpunkt $t_n$ bilden. Zwischen den Zeitpunkten $t_{n-1}$ und $t_n$ werden die Ausgänge dieses Schaltnetzes in einem Speicher wie insbesondere in Registern gespeichert, so dass ein Schaltwerk bzw. eine FSM entsteht.

Die vorgeschlagene Architektur kann noch folgendermaßen ausgebildet sein:

- Als Speichermittel können Registerspeicher vorgesehen sein.
- Insbesondere ist das Schaltnetz dreistufig ausgebildet.
- Dabei kann eine erste Stufe mehrere parallelgeschaltete Speicherbausteine enthalten, die über Eingabeleitungen adressierbar sind, wobei jedem Speicherbaustein eine Teilmenge der in einem zugehörenden, ermittelten Implikanten gebundenen Eingabevariablen zuzuführen sind, der ersten Stufe eine zweite Stufe mit Speicherbausteinen nachgeordnet sein, die durch Kennungen der einzelnen Implikanten zu adressieren sind, und
  der zweiten Stufe eine dritte Stufe mit Mitteln zu einer disjunktiven Verknüpfung der Ausgabewerte der einzelnen Implikanten aus den Speicherbausteinen der zweiten Stufe nachgeordnet sein.
- Dabei lassen sich die einzelnen Implikanten durch Minimierungsverfahren ermitteln.
- Ferner kann die erste Stufe mit der zweiten Stufe über wenigstens eine Kreuzschienenschalteinheit, einen so genannten Crossbar-Switch, miteinander verknüpft sein.
- Als Speicherbausteine können CAMs und/oder RAMs vorgesehen sein.
- Besonders vorteilhaft ist wenigstens ein GCA zu integrieren.
- Als Speicherelemente können magnetoresistive Bauelemente, insbesondere vom TMR-Typ, vorgesehen sein. Entsprechende tunnelmagnetoresistive Elemente sind an sich bekannt.

Den vorstehend angegebenen weiteren Ausgestaltungen der vorgeschlagenen Architektur liegen insbesondere die nachfolgend dargelegten Überlegungen zu Grunde:

Die Komplexität einer Schaltfunktion in dem gewählten Schaltnetz steigt zwar linear mit der Anzahl der Ausgabevariablen an, jedoch entfällt sämtlicher Aufwand für die Kommunikation der Zellen untereinander. In eine solche Schaltfunktion können viele einzelne Automaten mit wenigen Ausgabevariablen abgebildet werden, oder wenige GCAs mit vielen Ausgabevariablen oder auch eine Mischung verschiedener Zellen. Damit ist keine Granularität vorgegeben, und die Kommunikation der FSMs untereinander ist prinzipiell vollständig möglich. Eine Grenze ist jedoch durch die maximale Komplexität der Schaltfunktion gesetzt, die das Schaltnetz aufnehmen kann.

Die Benutzung eines Schaltnetzes mit einer großen Anzahl von Eingängen - dies wird im allgemeinen Fall entstehen, wenn ein GCA mit einer Anzahl von FSMs abgebildet wird - bedeutet, dass wiederum eine Art exponentielle Abhängigkeit des Flächenbedarfs von der Anzahl der Eingänge entstehen kann. Als obere Grenze gilt ein Wachstum der Fläche mit exp(Anzahl Zustände), wenn jeder Zustand in einem Bit codiert wird; im Allgemeinen Fall wird der Flächenbedarf geringer sein. Da eine universelle Schaltung jedoch den Maximalfall beinhalten muss, wäre das exponentielle Wachstumsgesetz anzuwenden.

Hier ist es als besonders vorteilhaft anzusehen, die Schaltung, die das Schaltnetz aufnimmt, in drei spezielle Abschnitte/Stufen einzuteilen. Dazu ist eine (re)konfigurierbare Schaltung angegeben, die Schaltfunktionen mit einer großen Zahl von Eingangsvariablen und einer großen Zahl von Ausgangsvariablen als Schaltnetz realisieren kann.

Um eine rekonfigurierbares Schaltnetz für Schaltfunktionen zu entwerfen, werden als Ausgangsüberlegung zwei Möglichkeiten betrachtet:

Zum einen ist es möglich, eine Schaltfunktion komplett in einem RAM-Speicher abzulegen. Die Eingabevariablen der Schaltfunktion bilden die Adressbits und adressieren für jede mögliche Kombination von Eingabevariablen eine Speicherzelle. Der Inhalt dieser Speicherzelle entspricht dann dem Wert der Schaltfunktion, die Datenleitungen des Speicherbausteins bilden die Ausgabevariablen der Funktion. Der Vorteil dieses Konzepts liegt im einfachen Aufbau der Schaltung, der einfachen Rekonfigurierbarkeit, der hohen Integrationsdichte von Speicherbausteinen und der festen Zeitdauer, die die Auswertung der Schaltfunktion benötigt. Allerdings steigt die Anzahl der benötigten Speicherzellen, also die Größe des benötigten Speicherbausteines exponentiell mit der Anzahl der Eingabevariablen an. Aus diesem Grunde können nur kleine Schaltfunktionen auf diese Weise abgebildet werden.

Dies ist Stand der Technik in PLDs und wird als Look-Up-Table-Struktur bei FPGAs eingesetzt, meist mit 4 binärwertigen Eingangsvariablen und 1 binärwertigen Ausgang.

Eine zweite Möglichkeit, Schaltfunktionen in ein Schaltnetz abzubilden, besteht darin, Gatter in einem 2- oder mehrstufigen Netz konfigurierbar anzuordnen. Damit ist es möglich, Schaltfunktion mit einem minimalen Verbrauch von Gattern in Schaltnetze abzubilden. Die Schaltkreistheorie stellt hier günstige Darstellungsformen von Schaltfunktionen wie z. B. die Reed-Muller-Form, oder auch leistungsfähige Algorithmen zur Logikminimierung bereit. Der Vorteil dieses Ansatzes besteht im minimalen Verbrauch von Gattern und in der Möglichkeit, leistungsfähige Verfahren und Algorithmen zur Minimierung zu nutzen (vgl. Literaturzitate [2] und [3]). Dieses Verfahren kann gut zur Darstellung einer festen Schaltfunktion z. B. der Realisierung eines ROMs genutzt werden. Über Hardwarebausteine wie z. B. Crossbar-Switches können die einzelnen Gatter rekonfigurierbar verschaltet werden, jedoch steigt hier der Aufwand für die Rekonfigurierbarkeit exponentiell mit der Anzahl der Eingabevariablen der Schaltfunktion an.

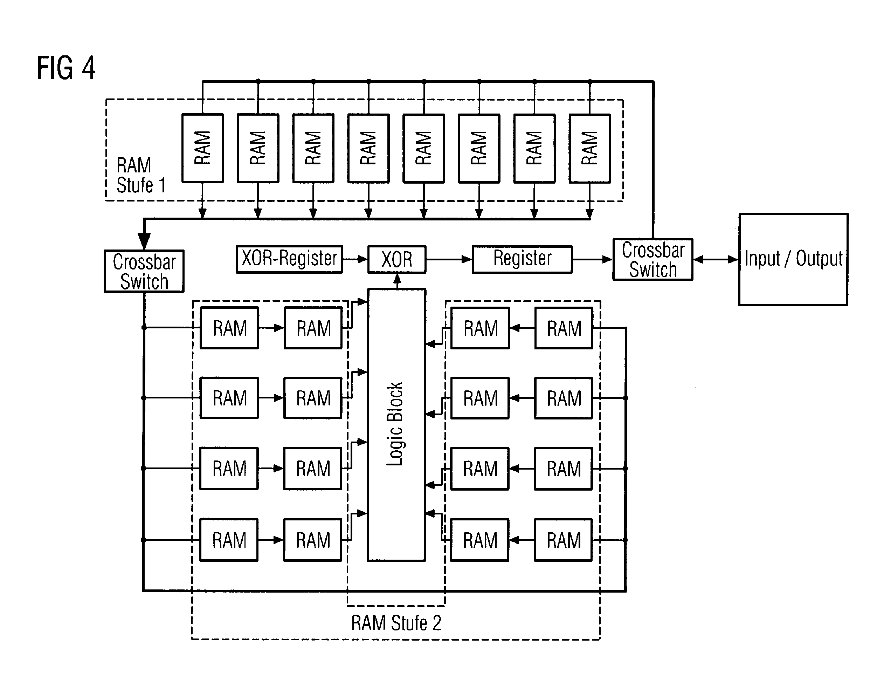

Die vorgeschlagene Architektur umfasst gemäß Figur 4 in ihrer konkreten Ausführung einen RAM-basierten Hauptteil mit einer als zweite RAM-Stufe bezeichneten, mehrere RAM-Zellen aufweisenden, strukturierten RAM-Einheit, die über ein Busleitungssystem adressierbar mit dem Ausgang einer Kreuzschienenschalteinheit (Crossbar-Switch) verknüpft ist. Auf deren Eingang werden Daten einer ersten RAM-Stufe gegeben. Der zweiten RAM-Stufe mit einem Logikblock ist eine antivalente Verknüpfungseinheit in Form eines so genannten XOR-Gliedes nachgeordnet, deren Daten einer Registereinheit zugeführt werden, die mit einer weiteren Kreuzschienenschalteinheit verknüpft ist. Über diese Einheit werden zum einen von außen zugeführte Eingangsdaten der ersten RAM-Stufe zugeführt, zum anderen die Ausgangsdaten zur Weiterverarbeitung abgegeben. Bei einer derartigen Architektur sind die Speicherbereiche "a priori" partitioniert.

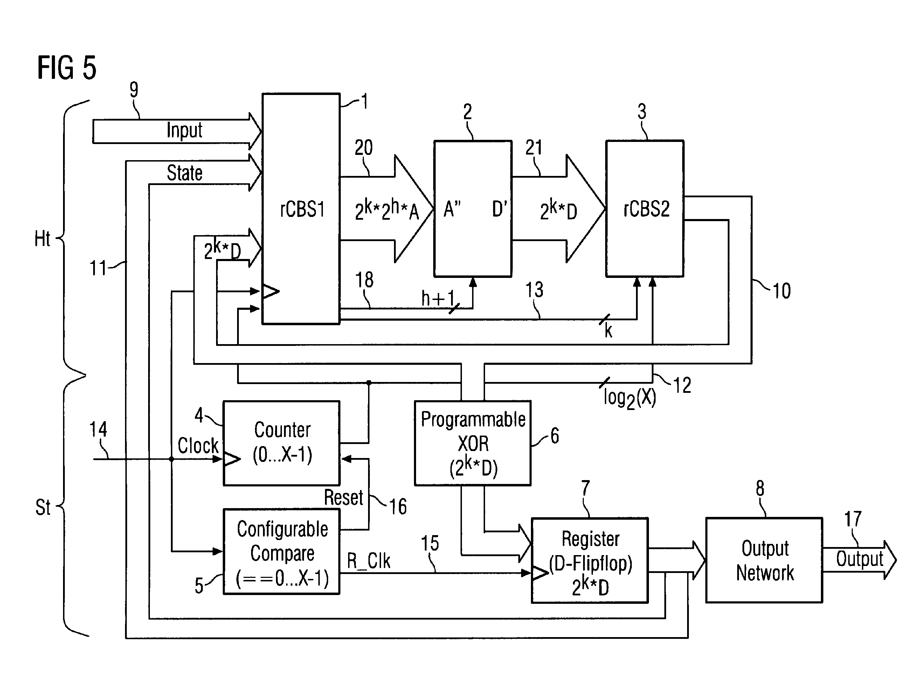

In den Figuren 5 bis 9 sind sich entsprechende Teile mit denselben Bezugszeichen versehen. Dabei sind bezeichnet bzw. benannt mit

1       eine erste Kreuzschienenschalteinheit bzw. CrossbarSwitch rCBS1,
2       eine strukturierbare RAM-Einheit bzw. RAM,
3       eine zweite Kreuzschienenschalteinheit bzw. ein Cross-bar-Switch rCBS2,
4       eine als Zähler bzw. Counter bezeichnete Zählereinheit,
5       eine konfigurierbare Vergleichseinheit bzw. Configurable Compare,
6       eine programmierbare antivalente (XOR-)Verknüpfungseinheit bzw. Programmable XOR,
7       eine Registereinheit bzw. Register,
8       ein Ausgangsnetzwerk bzw. Output Network,
9       ein Eingangsbus zur Schaltung bzw. Input,
10      ein drittes Datenbusleitungssystem zur Rückkopplung,
11      Zustandssignale bzw. State,
12      Zählerstandssignale,
13      Adresssignale,
14      Taktsignale bzw. Clock,
15      abgeleitete Taktsignale bzw. R_Clk
16      Resetsignale bzw. Reset,
17      ein Ausgangsbus der Schaltung bzw. Output,
18      Adresssignale,
20      ein erstes, eingangsseitiges Busleitungssystem,
21      ein zweites, ausgangsseitiges Busleitungssystem,
Ht      ein RAM-basierter Hauptteil,
St      ein zusätzlicher Steuerungsteil.

Weitere dargestellte Teile und ihre Bezeichnungen sind in der nachfolgenden Beschreibung angesprochen.

Der in Figur 5 dargestellte, allgemein mit Ht bezeichnete, RAM-basierte Hauptteil der Architektur besteht aus den zwei rekonfigurierbaren Kreuzschienenschalteinheiten, auch als "Crossbar-Switches" rCBS1 und rCBS2 bezeichnet mit den zugeordneten Bezugzeichen 1 und 3, der strukturierbaren RAM-Einheit 2, den verbindenden Bussystemen 20 und 21, in der Figur mit Adress-(A) und Datenbus (D) bezeichnet, den zusätzlichen Adressinformationen 13 und 18, dem rückkoppelnden Datenbus 10, zugleich den Eingang für die Zustandsregister der Einheit 7 darstellend, sowie den Verbindungsbussen 9 und 11 für die Eingänge zur Schaltung und die Rückkopplung des bisherigen Zustands 11.

Die zusätzlichen Schaltkreise stellen den allgemein mit St bezeichneten zusätzlichen Steuerungteil für eine integrierte, konfigurierbare Ablaufsteuerung sowie das Interface zum Ausgang dar. Hierzu gehören der rücksetzbare Zähler 4, die mit einem Rücksetzwert konfigurierbare Vergleichseinheit 5, die konfigurierbare antivalente Verknüpfungseinheit bzw. XOR-Einheit 6 sowie die Register 7, meist als D-Flipflop ausgebildet. Der Takt 14 liegt sowohl am Zähler 4 und am rCBS1(1) an. Diese beiden Einheiten werden direkt durch den Takt gesteuert in dem Sinn, dass eine Datenübernahme an den positiven (wahlweise auch negativen) Taktflanken durchgeführt wird. Die Datenübernahmen in Register 7 werden durch den vom Takt 14 abgeleiteten R_Clk 15 durchgeführt. Dieser Takt wird nur durchgelassen, d.h., eine positive (oder negative) Taktflanke erscheint nur dann am Register 7, wenn der Vergleich in der konfigurierbaren Vergleichseinheit 5 positiv ausfällt. Dies ist der Fall, wenn der Zählwert mit dem Vergleichwert übereinstimmt. In diesem Fall wird auch bei positiver Taktflanke ein aktives Resetsignal 16 zum Zähler 4 gegeben.

Der Ausgang der Register 7 ist via Datenbus 11 als bisheriger Zustand zu der Einheit rCBS1 (1) und zum Ausgang, dem Ausgangs(schalt)netzwerk 8 gekoppelt. In diesem Netzwerk 8 können die Zustände in der üblichen Form in Ausgangssignale gewandelt werden; diese Einheit hat im Übrigen keine besondere Bedeutung im Rahmen der Erfindung.

Die so gestaltete Architektur hat folgende Funktionsweise: Der Speicher, ausgebildet als strukturierbares RAM und in dieser Erfindungsmeldung noch näher erläutert, dient als Speicher für Tabellen. Man kann es sich also so vorstellen, dass im ersten Teil des Speichers, etwa ausgedrückt durch kleinere Adressen, die erste Tabelle gespeichert ist. Mit Hilfe der Werte aus diesem ersten Teil kann dann die zweite Tabelle im Speicher adressiert werden, z. B. an mittleren Adressen stehend, weiter die dritte usw., bis das Ergebnis feststeht.

Die erfindungsgemäße Anwendung richtet sich also auf die Integration von zellularen Automaten (CA), die aus Arrays von endlichen Zustandsautomaten (FSM) bestehen, in einem Baustein. Sie macht damit besonders, aber nicht ausschließlich, Gebrauch von Merkmalen, die in der genannten nicht-vorveröffentlichten DE-Anmeldung 10 2004 007 232.9 offenbart sind, wo das Konzept der Realisierung von globalen zellularen Automaten (GCA) auf einer konfigurierbaren Architektur entwickelt und beschrieben wurde.

Im Detail ergibt sich folgende Funktionsweise: Die Bedeutung des Zählers 4 besteht darin, die Anzahl der notwendigen Tabellen applikationsspezifisch festzulegen. Dies muss in Zusammenhang mit dem Vergleichsregister 5 (Configurable Compare) gesehen werden: In diesem Register wird vor dem eigentlichen Betrieb eine Zahl gespeichert, die dann die Anzahl der Durchläufe im Betrieb, die für die komplette Neuberechnung des nächsten Zustands notwendig sind, bestimmt. Eine '0' im Vergleichsregister 5 bedeutet dabei, dass nur eine Tabelle, die klassische Look-Up Table (LUT) genutzt wird, eine '1' steht für 2 Tabellen usw.

Während also der Zähler 4 als ein Binärzähler mit asynchronem Reset, etwa von 0 bis X-1 zählend, wobei X vorteilhaft aber nicht notwendig eine Potenz von 2 darstellen kann (etwa 4, 8, 16 ...), ausgeprägt sein wird, wird das tatsächliche Zählende durch das Vergleichsregister der Einheit 5 bestimmt. Das Ende der Zugriffe bedeutet dann, dass der nächste Zustand komplett berechnet wurde und nun dieser gespeichert werden kann. Die Steuerung dieses Speichervorgangs erfolgt im Vergleichsregister, und zwar durch die Steuerung des Taktes.

Hierzu wird das Signal Clock 14 im konfigurierbaren Register der Vergleichseinheit 5 so mit dem aktuellen Vergleich zum neuen Signal R_Clk 15 verknüpft, dass eine positive Flanke nur dann entsteht, wenn der Vergleich auf Gleichheit wahr ist, also bei Zählerwert = Vergleichswert. Zugleich wird das Signal Reset 16 derart erzeugt, dass der Zähler 4 definiert auf den Wert 0, dies ist zugleich der Startwert, zurückgesetzt wird. Die Erzeugung derartiger Signale 15 und 16 ist allgemeiner Stand der Technik und braucht deshalb nicht weiter erläutert zu werden. Um dies durchführen zu können, muss der Zähler 4 mit einem Eingang für asynchronen Reset mittels des entsprechenden Resetsignals 16 ausgestattet sein.

Das Herzstück der Schaltung besteht aus der RAM-Einheit 2. Diese RAM-Einheit besitzt eingangsseitig den Adressbus des Leitungssystems 20, eingeteilt in mehrere Adressteilbusse. Weiterhin wird eine Adressinformation 18 mit h + 1 Leitungen zur Verfügung gestellt. Dies ist notwendig, um die einzelnen Durchläufe und damit den Zugriff auf die Teiltabellen zu steuern. Die Ergebnisse der Tabellenzugriffe - pro Takt wird auf eine Teiltabelle zugegriffen, teilweise parallel - wird über den Datenbus des Leitungssystems 21, wiederum in mehrere Datenteilbusse einteilbar, ausgegeben. Die zusätzliche Information (1 bit) wird benötigt, um im letzten Durchgang zwischen einem Multiplexen und einer Oder-Verknüpfung umzuschalten.

Die Informationen am Adressbus 20 sowie an der Adressinformation 18 werden durch den rekonfigurierbaren Crossbar-Switch rCBS1 1 zusammengestellt. Hierzu sind die Eingangsbussysteme Input 9, State 11 und die Rückkopplung 10 des zuletzt ausgelesenen Tabellenwerts vorgesehen, aus deren Informationen der Adressbus für den nächsten Takt zusammengestellt werden kann. Zur weiteren Steuerung dient der aktuelle Wert des Zählers 4, den gerade ablaufenden Zyklus codierend, sowie der Takt 14.

Mit Hilfe dieses Taktes 14 können die Eingangswerte zwischengespeichert werden, um an der RAM-Einheit stabil anzuliegen. Dies ist nicht notwendig für den Zustand State 11, da diese Werte gespeichert sind, erweist sich jedoch als zweckmäßig für den Input 9 sowie die Rückkopplung über Datenbus 10. Alternativ könnte auch die Rückkopplung 10 bereits im rCBS2 (3) gespeichert werden. Es wird davon ausgegangen, dass jeder Eingang, ausgenommen die Eingänge des Datenbusses für State 10, als zwischenspeichernd oder direkt ohne Speicherung einkoppelnd konfigurierbar sind.

Das Element rCBS1 1 kann als Crossbar-Switch ausgeführt sein; dies bedeutet, dass jeder Ausgang des rCBS1 aus jedem Eingang zu beschalten ist; und dies kann frei konfiguriert werden. Da die Auswahl der Eingänge auch von dem aktuellen Zählerstand abhängt, ist es von Vorteil, diesen CBS entweder als rekonfigurierbaren CBS auszuführen, bei dem zu jedem Zählerwert eine neue Konfiguration in den Speicher zu laden ist, oder als frei konfigurierbare Schaltung, bei dem die Ausgangswahl von dem Zählerstand abhängig gemacht werden kann. Eine Ausführung als rekonfigurierbare Schaltung ist u.a. in Literaturstelle [2] beschrieben, während die frei konfigurierbare Struktur der handelsüblichen programmierbaren Logikbausteine entspricht und z. B. in Literaturstelle [3] beschrieben ist.

Die Erzeugung des zusätzlichen Bits (Zusatzinformation) muss in Form einer frei konfigurierbaren Schaltung erfolgen, sofern dieses Bit nicht bereits im Zähler 4 durch Feststellen der Gleichheit zwischen Zählwert und Vergleichswert erzeugt wird und dieses Bit dann genutzt wird. Die zweite Möglichkeit ist wesentlich einfacher, aber auch unflexibler, so dass im Allgemeinen von der Generierung im rCBS1 ausgegangen wird.

Der Ausgang der RAM-Einheit 2 wird durch den zweiten rekonfigurierbaren Crossbar-Switch rCBS2 (3) weiter bearbeitet. Hierzu sind zusätzlich die Adressinformationen 13 mit k bit notwendig, die eine Auswahl aus den $2^k$ Datenbussen 21 ermöglichen; weiterhin wird der Wert des Zählers 4 über den Zählbus 12 mit Hilfe $[\log_2(X)]$ (was eine Rundung bedeutet) übermittelt. Für rCBS2 gelten die gleichen Aussagen wie für rCBS1 bezüglich der Konfigurierbarkeit bzw. der Ausstattung.

Die Rückkopplung 10 führt beim letzten Zählerstand den nächsten Zustand, vorher jeweils Zwischenergebnisse. Der nächste Zustand soll jedoch gespeichert und direkt bzw. umgerechnet am Ausgang Output 17 der Umgebung zur Verfügung gestellt werden. Hierzu kann die Ausgabe an 10 in dem konfigurierbaren XOR-Element (Programmable XOR) 6 invertiert werden, wenn sich dies als günstig erweist. Es ist hierzu bekannt, dass die Darstellung als minimierte Disjunktive Normalform (DNF) in ca. der Hälfte der Fälle komplexer ist als die in der invertierten minimierten Disjunktiven Normalform (IDNF) und umgekehrt. Um beide zu ermöglichen, wurde die Einheit 6 hinzugefügt.

Der Zustand wird dann gegebenenfalls in teilweise invertierter Form in den Registern 7, gesteuert durch den Takt R_Clk 15, gespeichert. Die Ausgabe an Output 17 erfolgt gegebenenfalls nochmals umgerecht durch das konfigurierbare Schaltnetz Output Network 8, in dem aus den Zuständen bzw. deren Darstellung die in der Umgebung benötigten Signale berechnet werden. Dies stellt eine übliche Vorgehensweise dar.

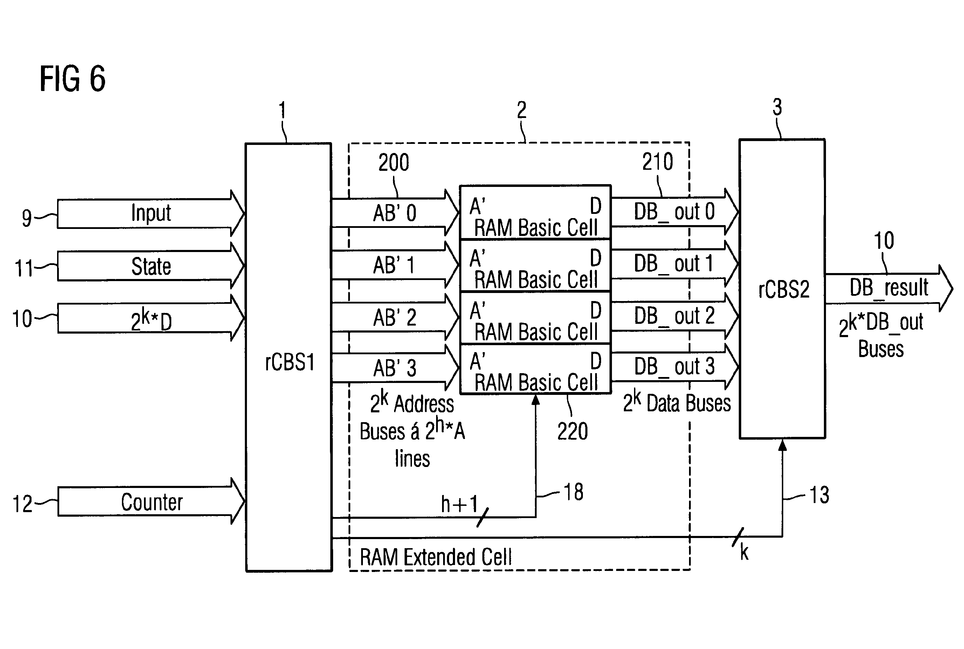

Für den Aufbau der einzelnen Elemente gilt Folgendes: RAM-Bereich bzw. -Einheit 2: Der Aufbau des kompletten RAM-Bereichs einschließlich der nicht dazugehörigen rekonfigurierbaren Crossbar-Switches 1 und 3 ist in Figur 6 dargestellt.

Der gesamte RAM-Bereich 2 ist in eine Anzahl von RAM-Basisbereichen 220 eingeteilt. Diese Anzahl, in Figur 6 sind 4 Basisbereiche dargestellt, ist vorteilhaft aber nicht notwendig eine Potenz von 2, also 2, 4, 8, 16 .... Der Vorteil einer derartigen Anzahl ist darin zu sehen, dass sich z. B. 4 Bereiche einer Größe M zu einem Bereich der Größe 4*M zusammenfassen lassen. Diese mögliche Zusammenfassung von $2^k$ Basisbereichen 220 aus Figur 6 erfolgt im rCBS2 (3) mit Hilfe der Informationen, die durch die k Leitungen 13 übertragen werden.

Werden die RAM-Basisbereiche nicht oder nur teilweise durch die aktuelle Konfiguration in rCBS2 zusammengefasst, bietet sich die Möglichkeit, das RAM zu segmentieren und dadurch die Funktionsweise, die vorstehend in Abschnitten 5.1 und 5.2 beschrieben wurde, zu gewährleisten.

Die Kopplung zwischen rCBS1 (1) und jedem der RAM-Basisbereiche erfolgt durch jeweils einen Adressbus 200, deren Gesamtheit den Adressbus 20 (Figur 5) bilden. Die Belegung der Leitungen jedes Adressbusses ist in rCBS1 (1) konfigurierbar, wobei als Eingänge die Bussysteme 9, 10 und 11 sowie der Zählerstand 12 zur Verfügung stehen. Weiterhin zeigt die Adressinformation 13 an k bit an, in welcher Weise rCBS2 (3) die ausgelesenen Informationen an den Datenbussen 210 verwenden soll. Die Information 13 kann z. B. aus dem Zählerstand 12 erzeugt sein: Für den Durchgang 0 gilt RAM 0, für 1 RAM-Bereich 1 usw., jedoch sind auch wesentlich komplexere Auswahlmuster konfigurierbar. Der Ausgang 10 des rCBS2 (3) hat dazu die gleiche Datenbusbreite wie die Summe aller Datenbusse 21 der RAM-Basisbereiche.

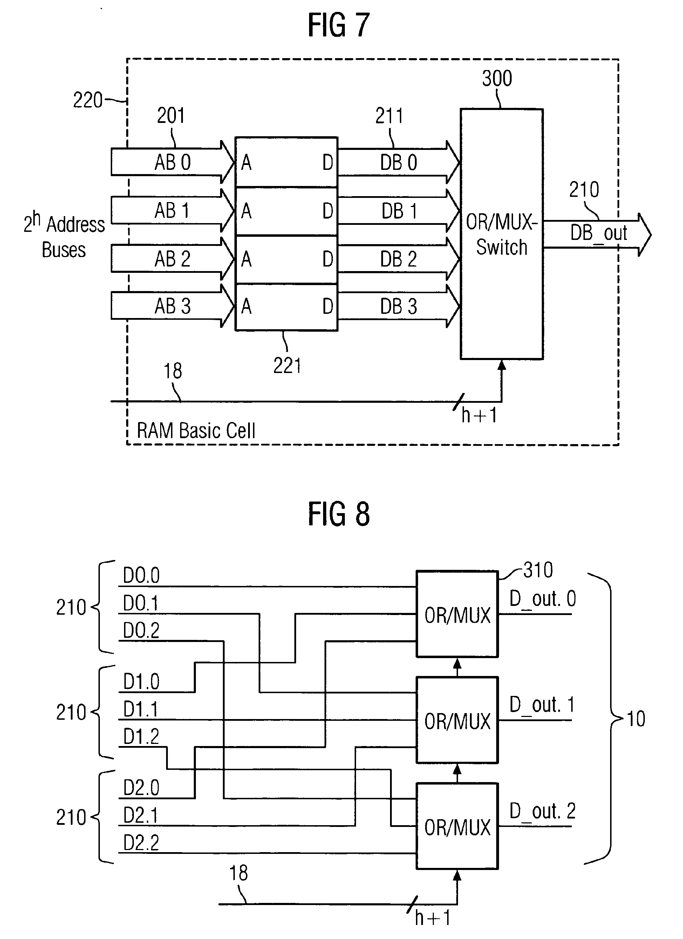

RAM-Basisbereich 220: Figur 7 zeigt eine Darstellung des RAM-Basisbereichs 220. Dieser besteht aus einer Anzahl von RAM-Basisblöcken oder -Zellen 221, deren Aufbau einem üblichen RAM-Baustein entspricht. Hier werden an dem jeweils einen Adressbus 201 die Adresse der auszulesenden RAM-Speicherzelle angelegt, nach Ablauf der üblichen Zugriffszeit ist das Ergebnis am jeweiligen Datenbus 211 anliegend.

Die Anzahl der RAM-Basisblöcke 221 in einem RAM-Basisbereich 220 ist in Figur 7 mit 4 angegeben. Die konkrete Anzahl ist vorteilhaft, aber nicht notwendig einer Zweierpotenz entsprechend, also 2, 4, 8, 16, .... Die Anzahl der RAM-Basisblöcke entscheidet über die Granularität, mit der das gesamte RAM auf die verschiedenen Zyklen, die in einer Applikation ablaufen, aufgeteilt werden kann. Die Anzahl der RAM-Basisbereiche 220 in der RAM-Einheit 2 entscheidet hingegen darüber, mit welcher Parallelität und damit Datenbusbreite gearbeitet werden kann.

Zu dem RAM-Basisbereich zugehörig ist eine konfigurierbare Schalteinheit 300, als OR/MUX-Switch, einer Kombination aus ODER- (OR) und Multiplexerauswahlschaltung (mit MUX = Multiplexer) bezeichnet. Hier wird in Abhängigkeit von der Adressinformation 18 entschieden, welcher der Datenbusse am Ausgang DB_out 10 erscheint oder ob die Datenbusse sogar vorher miteinander logisch verknüpft werden. Diese Verknüpfung ist nach der nicht-vorveröffenlichten DE-Anmeldung 10 2004 007 232.9 in der letzten Stufe der Maschine notwendig, um die gewollte Funktionalität zu ermöglichen.

Figur 8 zeigt den Aufbau der OR/MUX-Schalteinheit 300. Man erkennt, dass die Verknüpfung bitweise erfolgt. In der dargestellten Weise - die Datenbusbreite ist hier aus darstellerischen Gründen auf drei beschränkt - wird deutlich, dass die Datenbits mit dem Suffix 0 jedes Datenbusses 210 auf eine logische Untereinheit 310, die Datenbits mit dem Suffix 1 jedoch auf eine andere Untereinheit 310 zusammengeführt werden.

Alle Untereinheiten 310 sind dabei mit der Adressinformation 18 über eine entsprechende Busleitung verbunden.

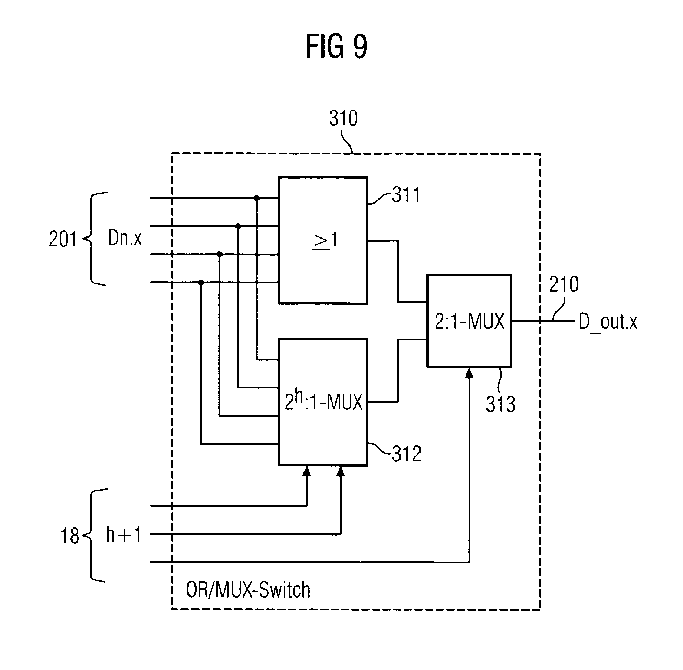

Figur 9 zeigt die innere Struktur, die in den OR/MUX-Switch-Untereinheiten 310 mindestens vorhanden sein soll, um zu einer erfindungsgemäßen Ausprägung der Schaltung zu gelangen. Eine Logikeinheit 311 ermöglicht die OR-Verknüpfung der entsprechenden Datenbits, ein $2^k$:1-Multiplexer 312 die Auswahl eines Datenbits. Von diesen Teileinheiten 311 und 312 sind in einer Untereinheit 310 jeweils einer vorhanden, in der gesamten OR/MUX-Switch-Einheit 300 der Datenbusbreite eines Datenbusses 210 entsprechend. Die Funktionalität der Teileinheiten 311 und 312 und eines ihnen nachgeordneten 2:1-Multiplexers 313 sind wohlbekannt, so dass auf deren Erläuterung verzichtet werden kann.

Die Auswahl, welche Verknüpfung aktuell genutzt wird, erfolgt über das zusätzliche Informationsbit in der Adressinformation 18. Es ist angestrebt, gemäß dem in der nicht-vorveröffenlichten DE-Anmeldung 10 2004 007 232.9 definierten Ablauf in den ersten Durchläufen zur Berechnung eines neuen Zustands den Multiplexer zu nutzen, um die verschiedenen RAM-Basisblöcke für verschiedene Tabellen zu nutzen. Im letzten Durchgang hingegen wird die OR-Verknüpfung benötigt.

Das zusätzliche Informationsbit muss von der Einheit rCBS1 (1) auf Grund des Zählerwerts (12) berechnet werden.

Bei der vorstehenden Beschreibung wurde neben dem eingangs genannten Stand der Technik noch auf folgende Literatur zurückgegriffen:

[1] Rolf Hoffmann, Klaus-Peter Völkmann, Wolfgang Heenes: "Globaler Zellularautomat (GCA): Ein neues massivparalleles Berechnungsmodell", Mitteilungen - Gesellschaft für Informatik e.V., Parallel-Algorithmen und Rechnerstrukturen, ISSN 0177-0454 Nr. 18, 2001, Seiten 21-28; http://www.ra.informatik.tu-darmstadt.de/publikationen/ publik.html

[2] R.K.Brayton et al.: "Logic Minimization Algorithms for VLSI Synthesis", Kluwer Academic Publishers, USA 1984, insbesondere Seiten 1 bis 14, 54 bis 88 und 139 bis 147

[3] Mike Trapp: "PLD-design methods migrate existing designs to high-capacity devices", EDN Access, Febr. 1994; http://www.reed-electronics.com/ednmag/archives/1994/ 021794/04df1.htm

[4] Wolfgang Heenes, Rolf Hoffmann, Klaus-Peter Völkmann: "Architekturen für den globalen Zellularautomaten". 19th PARS Workshop, March 19-21, 2003 Basel; http://www.ra.informatik.tu-darmstadt.de/publikationen/ pars03.pdf

[5] WO 2004/040766 A2

[6] US 4 870 302 A

[7] W.Oberschelp/G.Vossen : "Rechneraufbau und Rechnerstrukturen", 8.Aufl.,2000, Verlag Oldenburg (DE) / ISBN 3-486-25340-9

## Patentansprüche

1. Rechnereinrichtung mit rekonfigurierbarer Architektur zur Aufnahme eines globalen zellularen Automaten, enthaltend

   - einen RAM-basierten Hauptteil mit

      - einer mehrere RAM-Zellen (221) aufweisenden, strukturierbaren RAM-Einheit (2),
      - einer ersten Kreuzschienenschalteinheit (1), auf deren Eingang Eingangsdaten (9) der Architektur von außen zugebbar sind und deren Ausgang mit dem Eingang der RAM-Einheit (2) über ein erstes Busleitungssystem (20) verknüpft ist, und

- einer zweiten Kreuzschienenschalteinheit (3), deren Eingang mit dem Ausgang der RAM-Einheit (2) über ein zweites Busleitungssystem (21) verknüpft ist und deren Ausgang mit dem Eingang der ersten Kreuzschienenschalteinheit (1) über ein drittes Busleitungssystem (10) zu einer Rückkopplung von ausgangsseitigen Daten der zweiten Kreuzschienenschalteinheit (3) in den Eingang der ersten Kreuzschienenschalteinheit (1) verknüpft ist,

wobei zur Adressierung der RAM-Einheit (2) und der zweiten Kreuzschienenschalteinheit (3) von der ersten Kreuzschienenschalteinheit (1) erzeugte Adresssignale (18 bzw. 13) zuführbar sind und
wobei die ausgangsseitigen Daten der zweiten Kreuzschienenschalteinheit (3), gegebenenfalls nach weiterer Bearbeitung, auch einem Ausgangsnetzwerk (8) zur Abgabe von Ausgangsdaten (17) der Architektur zuführbar sind,
**dadurch gekennzeichnet, dass**
- Mittel eines zusätzlichen Steuerteils (St) zu einer Ablaufsteuerung des Hauptteils mit einer Zählereinheit (4) vorhanden sind, wobei der Zählereinheit (4) und der ersten

Kreuzschienenschalteinheit (1) ein gemeinsames Taktsignal (14) zuzuführbar ist und wobei der ersten und zweiten Kreuzschienenschalteinheit (1 bzw. 3) von der Zählereinheit (4) erzeugte Zählerstandssignale (12) zuführbar sind.

2. Rechnereinrichtung nach Anspruch 1, **dadurch gekennzeichnet, dass** die ausgangsseitigen Daten der zweiten Kreuzschienenschalteinheit (3) zunächst einer programmierbaren antivalenten Verknüpfungseinheit (6) zuführbar sind.

3. Rechnereinrichtung nach Anspruch 1 oder 2, **dadurch gekennzeichnet, dass** die ausgangsseitigen Daten der zweiten Kreuzschienenschalteinheit (3) einer nachgeordneten Registereinheit (7) zuführbar sind, deren Ausgang mit dem Ausgangsnetzwerk (8) zur Abgabe von Ausgangsdaten (17) der Architektur verknüpft ist.

4. Rechnereinrichtung nach Anspruch 2 und 3, **dadurch gekennzeichnet, dass** der Zählereinheit (4) eine konfigurierbare Vergleichseinheit (5) zugeordnet ist, der das gemeinsame Taktsignal (14) zuführbar ist, wobei der Registereinheit (7) ein die Datenübernahme aus der antivalenten Verknüpfungseinheit (6) steuerndes Taktsignal (15) der Vergleichseinheit (5) und der Zählereinheit (4) ein Rücksetzsignal (16) der Vergleichseinheit (5) zuführbar sind.

5. Rechnereinrichtung nach Anspruch 3 oder 4, **dadurch gekennzeichnet, dass** der ersten Kreuzschienenschalteinheit (1) Zustandssignale (11) der Registereinheit (7) zuführbar sind.

6. Rechnereinrichtung nach einem der vorangehenden Ansprüche, **dadurch gekennzeichnet, dass** die RAM-Einheit (2) RAM-Basisbereiche (220) enthält, die die mit einer OR/MUX-Schalteinheit (300) verknüpften RAM-Zellen (221) aufweist.

7. Rechnereinrichtung nach Anspruch 6, **dadurch gekennzeichnet, dass** der OR/MUX-Schalteinheit (300) Adresssignale (18) von der ersten Kreuzschienenschalteinrichtung (1) zuführbar sind.

8. Rechnereinrichtung nach Anspruch 6 oder 7, **dadurch gekennzeichnet, dass** mittels Adresssignalen (13) von der ersten Kreuzschienenschalteinrichtung (1) eine Zusammenfassung von RAM-Basisbereichen (220) zuführbar ist.

9. Rechnereinrichtung nach einem der vorangehenden Ansprüche, **dadurch gekennzeichnet, dass** als zusätzliche Speicherbausteine CAMs vorgesehen sind.

10. Rechnereinrichtung nach einem der vorangehenden Ansprüche, **dadurch gekennzeichnet, dass** wenigstens ein GCA integriert ist.

11. Rechnereinrichtung nach einem der vorangehenden Ansprüche, **dadurch gekennzeichnet, dass** als Speicherelemente magnetoresistive Bauelemente, insbesondere vom TMR-Typ, vorgesehen sind.

**Claims**

1.  Computer having a reconfigurable architecture for integrating a global cellular automaton, containing

    - a RAM-based primary part comprising

        - a structurable RAM unit (2) comprising a plurality of RAM blocks (221),
        - a first crossbar switch (1), where external input data (9) on the architecture is to be applied to its input, and whose output is connected to the input of the RAM unit (2) via a first bus system (20), and
        a second crossbar switch (3), whose input is connected to the output of the RAM unit (2) via a second bus system (21), and whose output is connected to the input of the first crossbar switch (1) via a third bus system (10) in order to feedback output-side data from the second crossbar switch (3) to the input of the first crossbar switch (1),

        where address signals (18 and 13) produced by the first crossbar switch (1) are to be input to the RAM unit (2) and the second crossbar switch (3) for addressing,
        and
        where the output-side data from the second crossbar switch (3), if necessary after further processing, can also be input to an output network (8) for the output of output data (17) on the architecture,
        **characterized in that**
        - means are available in an additional control part (St) for sequential control of the primary part, comprising a counter unit (4), where a common clock signal (14) can be input to the counter unit (4) and to the first crossbar switch (1), and where counter reading signals (12) produced by the counter unit (4) can be input to the first and second crossbar switches (1 and 3).

2.  Computer according to Claim 1, **characterized in that** the output-side data from the second crossbar switch (3) is initially to be input to a programmable Exclusive-Or logic unit (6).

3.  The computer according to Claim 1 or 2, **characterized in that** the output-side data from the second crossbar switch (3) can be input to a downstream register unit (7) whose output is connected to the output network (8) for the output of output data (7) on the architecture.

4.  Computer according to Claim 2 or 3, **characterized in that** the counter unit (4) is assigned a configurable compare unit (5), which is to receive the common clock signal (14), where a clock signal (15) that comes from the compare unit (5) and controls the data transfer from the Exclusive-Or logic unit (6) can be input to the register unit (7), and a reset signal (16) from the compare unit (5) is to be input to the counter unit (4).

5.  Computer according to Claim 3 or 4, **characterized in that** state signals (11) from the register unit (7) are to be input to the first crossbar switch (1).

6.  Computer according to any of the preceding claims, **characterized in that** the RAM unit (2) contains RAM basic cells (220) that comprise the RAM blocks (221) combined by an OR/MUX switch (300).

7.  Computer according to Claim 6, **characterized in that** address signals (18) from the first crossbar switch (1) can be input to the OR/MUX switch (300).

8.  Computer according to Claim 6 or 7, **characterized in that** RAM basic cells (220) are to be combined by means of address signals (13) from the first crossbar switch (1).

9.  Computer according to any of the preceding claims, **characterized in that** CAMs are provided as additional memory devices.

10. Computer according to any of the preceding claims, **characterized in that** at least one GCA is integrated.

11. Computer according to any of the preceding claims, **characterized in that** magnetoresistive components, in particular TMR type devices, are provided as storage elements.

**Revendications**

1. Dispositif informatique à architecture reconfigurable pour la réception d'un automate cellulaire global, comportant

   - une partie principale à base de RAM ayant

     - une unité ( 2 ) RAM ) structurable et ayant plusieurs cellules ( 221 ) RAM,
     - une première unité ( 1 ) de commutation crossbar, à l'entrée de laquelle des données ( 9 ) d'entrée peuvent être données à l'architecture de l'extérieur et dont la sortie est reliée à l'entrée de l'unité ( 2 ) RAM par un premier système ( 20 ) de ligne de bus et
     - une deuxième unité ( 3 ) de commutation crossbar, dont l'entrée est reliée à la sortie de l'unité ( 2 ) RAM par un deuxième système ( 21 ) de ligne de bus et dont la sortie est reliée à l'entrée de la première unité ( 1 ) de commutation crossbar par un troisième système ( 10 ) de ligne de bus pour ramener des données du côté de la sortie de la deuxième unité ( 3 ) crossbar à l'entrée de la première unité ( 1 ) de commutation crossbar,

     dans lequel, pour l'adressage de l'unité ( 2 ) RAM et de la deuxième unité ( 3 ) de commutation crossbar, des signaux ( 18 ou 13 ) d'adresse produits par la première unité ( 1 ) de commutation crossbar, peuvent être amenés et

     dans lequel les données du côté sortie de la deuxième unité ( 3 ) de commutation crossbar peuvent, le cas échéant après un traitement supplémentaire, être amenées aussi à un réseau ( 8 ) de sortie pour faire sortir des données ( 17 ) de sortie de l'architecture,
     **caractérisé en ce que**
     - il est prévu des moyens d'une partie ( St ) de commande supplémentaire pour une commande de déroulement de la partie principale ayant une unité ( 4 ) de compteur, un signal ( 14 ) d'horloge commun pouvant être envoyé à l'unité ( 4 ) de compteur et à la première unité ( 1 ) de commutation crossbar et des signaux ( 12 ) d'état du compteur produits par l'unité ( 4 ) de compteur pouvant être envoyés à la première et à la deuxième unité ( 1 et 3 ) de commutation crossbar.

2. Dispositif informatique suivant la revendication 1, **caractérisé en ce que** les données côté sortie de la deuxième unité ( 3 ) de commutation crossbar peuvent être envoyées d'abord à une unité ( 6 ) de combinaison OU exclusif programmable.

3. Dispositif informatique suivant la revendication 1 ou 2, **caractérisé en ce que** les données côté sortie de la deuxième unité ( 3 ) de commutation crossbar peuvent être envoyées à une unité ( 7 ) de registre en aval, dont la sortie est combinée au réseau ( 8 ) de sortie pour sortir des données ( 17 ) de sortie de l'architecture.

4. Dispositif informatique suivant la revendication 2 et 3, **caractérisé en ce qu'**à l'unité ( 4 ) de compteur est associée une unité ( 5 ) de comparaison configurable, à laquelle peut être envoyé le signal ( 14 ) d'horloge commun, dans lequel il peut être envoyé à l'unité ( 7 ) de registre un signal ( 15 ) d'horloge de l'unité ( 5 ) de comparaison commandant la prise en charge de données provenant de l'unité ( 6 ) de combinaison OU exclusif et à l'unité ( 4 ) de compteur un signal ( 16 ) de remise à l'état initial de l'unité ( 5 ) de comparaison.

5. Dispositif informatique suivant la revendication 3 ou 4, **caractérisé en ce que** des signaux ( 11 ) d'état de l'unité ( 7 ) de registre peuvent être envoyés à la première unité ( 1 ) de commutation crossbar.

6. Dispositif informatique suivant l'une des revendications précédentes, **caractérisé en ce que** l'unité ( 2 ) RAM comporte des zones ( 220 ) de base RAM qui ont les cellules ( 221 ) RAM combinées à une unité ( 300 ) de commutation OR/MUX.

7. Dispositif informatique suivant la revendication 6, **caractérisé en ce que** des signaux ( 18 ) d'adresse peuvent être envoyés à l'unité ( 300 ) de commutation OR/MUX par le premier dispositif ( 1 ) de commutation crossbar.

8. Dispositif informatique suivant la revendication 6 ou 7, **caractérisé en ce qu'**au moyen des signaux ( 13 ) d'adresse, un résumé de zones ( 220 ) de base RAM peut être envoyé par le premier dispositif ( 1 ) de commutation crossbar.

9. Dispositif informatique suivant l'une des revendications précédentes, **caractérisé en ce que** des modules de mémoire CAM supplémentaires sont prévus.

**10.** Dispositif informatique suivant l'une des revendications précédentes, **caractérisé en ce qu'**au moins un CRCA est intégré.

**11.** Dispositif informatique suivant l'une des revendications précédentes, **caractérisé en ce qu'**il est prévu comme élément de mémoire des composants magnéto-résistifs, notamment du type TMR.

# FIG 1

# FIG 2

# FIG 3

Input Vector x

Output Decoder
g(u, x)

Output Vector y

Next State Decoder
f(u, x)

Internal State
$u(t_n)$

Next Internal
State $u(t_{n+1})$

Clock

Register

FIG 4

# FIG 5

EP 1 789 889 B1

FIG 6

# FIG 7

220

201

AB 0 → A    D → DB 0    211

$2^h$ Address Buses

AB 1 → A    D → DB 1

AB 2 → A    D → DB 2

AB 3 → A    D → DB 3

300

OR/MUX-Switch → DB_out    210

221

18

h+1

RAM Basic Cell

# FIG 8

210 {
D0.0
D0.1
D0.2
}

210 {
D1.0
D1.1
D1.2
}

210 {
D2.0
D2.1
D2.2
}

310

OR/MUX → D_out. 0

OR/MUX → D_out. 1

OR/MUX → D_out. 2

10

18

h+1

# FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004007232
- WO 2004040766 A2
- US 4870302 A

**In der Beschreibung aufgeführte Nicht-Patentliteratur**

- **C. WIEGAND et al.** Lecture Notes in Computer Science. Springer Verlag, Februar 2004, vol. 2981, 140-155
- Globaler Zellularautomat (GCA): Ein neues massivparalleles Berechnungsmodell. **ROLF HOFFMANN ; KLAUS-PETER VÖLKMANN ; WOLFGANG HEENES.** Mitteilungen - Gesellschaft für Informatik e.V., Parallel-Algorithmen und Rechnerstrukturen. 2001, 21-28
- **R.K.BRAYTON et al.** Logic Minimization Algorithms for VLSI Synthesis. Kluwer Academic Publishers, 1984, 1-1454-88139-147
- **MIKE TRAPP.** PLD-design methods migrate existing designs to high-capacity devices. *EDN Access,* Februar 1994, http://www.reed-electronics.com/ednmag/archives/1994/ 021794/04df1.htm
- **WOLFGANG HEENES ; ROLF HOFFMANN ; KLAUS-PETER VÖLKMANN.** Architekturen für den globalen Zellularautomaten. *19th PARS Workshop,* 19. Marz 2003, http://www.ra.informatik.tu-darmstadt.de/publikationen/ pars03.pdf
- **W.OBERSCHELP ; G.VOSSEN.** Rechneraufbau und Rechnerstrukturen. Verlag Oldenburg, 2000